# EUROPEAN PATENT APPLICATION

(11) **EP 4 852 204 A1**
(43) Date of publication of application: **09.12.2026**
(21) Application number: 26163791.2
(22) Date of filing: 10.03.2026
(51) Int. Cl.: H01M 50/507, H01M 50/209, H01M 50/342

(54) **BATTERY MODULE**

(30) Priority: 05.06.2025 KR 20250073831
(71) Applicant: SAMSUNG SDI CO., LTD., Yongin-si, Gyeonggi-do 17084 (KR)
(72) Inventor: Kim, Hyun-Kook, 17084 Yongin-si (KR); Cho, Mansik, 17084 Yongin-si (KR)
(74) Representative: Regimbeau

(57) **Abstract**

The present disclosure provides a battery module. The battery module includes a plurality of battery cells each including a vent and an electrode terminal, and a busbar that electrically connects the plurality of electrode terminals, at least a part of the busbar may be disposed between the plurality of vents. With this configuration, the battery module may maximize an area of the busbar to mitigate heat generation of the busbar.

## Description

### FIELD

The present disclosure relates to a battery module.

### TECHNICAL BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The herein information disclosed in this Technical Background section is for enhancement of understanding of the background of the present disclosure, and therefore, it may contain information that does not constitute related (or prior) art.

### SUMMARY

The present disclosure provides a battery module for solving the herein-described problems.

These and other aspects and features of the present disclosure will be described in or will be apparent from the following description of embodiments of the present disclosure.

According to the invention, there is provided a battery module as defined in appended claim 1. Non-limiting, additional features of embodiments are defined in the corresponding dependent claims.

According to a first aspect of the present disclosure, there is provided a battery module comprising: a plurality of battery cells each comprising a vent and an electrode terminal; and a busbar electrically connecting the plurality of electrode terminals, wherein at least a part of the busbar is disposed between the plurality of vents.

According to a second aspect of the present disclosure, in the battery module according to the first aspect, the busbar comprises: a first busbar electrically connecting electrode terminals of adjacent battery cells; a second busbar electrically connecting electrode terminals of spaced-apart battery cells, wherein at least a part of the second busbar is disposed between the plurality of vents; and a third busbar electrically connecting an electrode terminal disposed on one side of one of the battery cells and an electrode terminal disposed on another side of another one of the battery cells.

According to a third aspect of the present disclosure, in the battery module according to the second aspect, the second busbar comprises: a second base plate disposed spaced apart from the battery cells; a (2-1)-th coupling part protruding to one side from the second base plate and coupled to an electrode terminal of one of the battery cells; a (2-2)-th coupling part protruding to the one side from the second base plate, spaced apart from the (2-1)-th coupling part, and coupled to an electrode terminal of another one of the battery cells; and a second extended portion protruding to another side from the second base plate and disposed between the plurality of vents.

According to a fourth aspect of the present disclosure, in the battery module according to the third aspect, the second extended portion is formed to a length to be spaced apart from a center line connecting centers of the vents respectively formed in the plurality of battery cells.

According to a fifth aspect of the present disclosure, in the battery module according to the third or fourth aspect, the second extended portion is disposed between vents respectively formed on adjacent battery cells, and is formed with a size equal to or smaller than a gap between the vents.

According to a sixth aspect of the present disclosure, in the battery module according to any one of the third to fifth aspects, the second extended portion is disposed spaced apart from a score part formed inside the vent.

According to a seventh aspect of the present disclosure, in the battery module according to any one of the second to sixth aspects, the third busbar comprises: a third base plate disposed spaced apart from the battery cells and comprising a through-hole that communicates with the vent; a (3-1)-th coupling part protruding to one side of the third base plate and coupled to an electrode terminal disposed on one side of one of the battery cells; and a (3-2)-th coupling part protruding to another side of the third base plate and coupled to an electrode terminal disposed on another side of another one of the battery cells.

According to an eighth aspect of the present disclosure, in the battery module according to the seventh aspect, the through-hole is formed in a shape corresponding to the vent, and is formed with a size equal to or larger than a circumference of the vent.

According to a ninth aspect of the present disclosure, in the battery module according to the seventh or eighth aspect, the third busbar further comprises a third extended portion protruding from the third base plate and disposed between the plurality of vents.

According to a tenth aspect of the present disclosure, in the battery module according to the ninth aspect, the third extended portion is formed to a length to be spaced apart from a center line connecting centers of the vents respectively formed in the plurality of battery cells.

According to an eleventh aspect of the present disclosure, in the battery module according to the ninth or tenth aspect, the third extended portion is disposed between vents respectively formed on adjacent battery cells, and is formed with a size equal to or smaller than a gap between the vents.

According to a twelfth aspect of the present disclosure, in the battery module according to any one of the second to eleventh aspects, the busbar further comprises: a fourth busbar coupled to an electrode terminal disposed on one side of one of the battery cells and electrically connected to an external terminal; and a fifth busbar coupled to an electrode terminal disposed on another side of another one of the battery cells and electrically connected to an external terminal.

According to a thirteenth aspect of the present disclosure, in the battery module according to the twelfth aspect, the fourth busbar comprises: a fourth base plate disposed spaced apart from the battery cells; a (4-1)-th coupling part protruding to one side from the fourth base plate and coupled to an electrode terminal of one of the battery cells; a (4-2)-th coupling part protruding from the fourth base plate in a direction intersecting the one side, spaced apart from the (4-1)-th coupling part, and electrically connected to the external terminal; and a fourth extended portion protruding to another side from the fourth base plate and disposed between the plurality of vents.

According to a fourteenth aspect of the present disclosure, in the battery module according to the thirteenth aspect, the fourth extended portion is formed to a length to be spaced apart from a center line connecting centers of the vents respectively formed in the plurality of battery cells.

According to a fifteenth aspect of the present disclosure, in the battery module according to the thirteenth or fourteenth aspect, the fourth extended portion is disposed between vents respectively formed on adjacent battery cells, and is formed with a size equal to or smaller than a gap between the vents.

According to a sixteenth aspect of the present disclosure, in the battery module according to any one of the second to fifteenth aspects, the plurality of battery cells comprise first to eighth battery cells disposed along a first direction, and the first busbar comprises: a (1-1)-th busbar connecting a (1-1)-th electrode terminal of the first battery cell and a (2-2)-th electrode terminal of the second battery cell; a (1-2)-th busbar connecting a (3-2)-th electrode terminal of the third battery cell and a (4-1)-th electrode terminal of the fourth battery cell; a (1-3)-th busbar connecting a (5-1)-th electrode terminal of the fifth battery cell and a (6-2)-th electrode terminal of the sixth battery cell; and a (1-4)-th busbar connecting a (7-2)-th electrode terminal of the seventh battery cell and an (8-1)-th electrode terminal of the eighth battery cell.

According to a seventeenth aspect of the present disclosure, in the battery module according to any one of the second to sixteenth aspects, the plurality of battery cells comprise first to eighth battery cells disposed along a first direction, and the second busbar comprises: a (2-1)-th busbar connecting a (2-1)-th electrode terminal of the second battery cell and a (5-2)-th electrode terminal of the fifth battery cell; and a (2-2)-th busbar connecting a (4-2)-th electrode terminal of the fourth battery cell and a (7-1)-th electrode terminal of the seventh battery cell.

According to an eighteenth aspect of the present disclosure, in the battery module according to any one of the second to seventeenth aspects, the plurality of battery cells comprise first to eighth battery cells disposed along a first direction, and the third busbar connects a (1-2)-th electrode terminal of the first battery cell and a (3-1)-th electrode terminal of the third battery cell.

According to a nineteenth aspect of the present disclosure, in the battery module according to any one of the twelfth to eighteenth aspects, the plurality of battery cells comprise first to eighth battery cells disposed along a first direction, the fourth busbar is coupled to a (6-1)-th electrode terminal of the sixth battery cell, and the fifth busbar is coupled to an (8-2)-th electrode terminal of the eighth battery cell.

According to a twentieth aspect of the present disclosure, in the battery module according to any one of the first to nineteenth aspects, the busbar comprises: a first busbar electrically connecting electrode terminals of adjacent battery cells; and a second busbar electrically connecting an electrode terminal of one of the battery cells and an external terminal, and wherein the first busbar comprises: a first base plate disposed spaced apart from the battery cells; a coupling portion extending to one side of the first base plate and coupled to the electrode terminals of the plurality of battery cells to be electrically connected; and an extended portion extending from another side of the first base plate toward a side of the vents and disposed between the plurality of vents.

A battery module according to some embodiments of the present disclosure for solving the technical problem includes a plurality of battery cells each including a vent and an electrode terminal, and a busbar that electrically connects the plurality of electrode terminals, at least a part of the busbar may be disposed between the plurality of vents.

According to some embodiments of the present disclosure, the battery module may maximize an area of the busbar to mitigate heat generation of the busbar.

According to some embodiments of the present disclosure, the battery module may be configured to maximize an area of the busbar without interfering with a vent of the battery cell, thereby preventing obstruction of an exhaust path or heat propagation.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is an exploded perspective view illustrating an example of a battery module according to some embodiments of the present disclosure.
FIG. 2 is a perspective view illustrating an example of a battery module according to some embodiments of the present disclosure.
FIG. 3 is a plan view illustrating an example of a battery module according to some embodiments of the present disclosure.
FIG. 4 is a perspective view illustrating an example of a second busbar among busbars of a battery module according to some embodiments of the present disclosure.
FIG. 5 is an enlarged view illustrating an example of region A in FIG. 3.
FIG. 6 is an enlarged view illustrating an example of region B in FIG. 3.
FIG. 7 is a perspective view illustrating an example of a third busbar among busbars of a battery module according to some embodiments of the present disclosure.
FIG. 8 is a perspective view illustrating an example of a fourth busbar among busbars of a battery module according to some embodiments of the present disclosure.
FIG. 9 is a plan view illustrating a plurality of battery cells in a battery module according to some embodiments of the present disclosure.
FIG. 10 is a plan view illustrating an example of busbars of a battery module according to some embodiments of the present disclosure.
FIG. 11 is a perspective view illustrating another example of a busbar in a battery module according to some embodiments of the present disclosure.
FIG. 12 is a plan view illustrating another example of a busbar in a battery module according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would be directly and unambiguously derivable from the content of the present application as filed.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A plurality of such secondary batteries may be electrically and mechanically connected to configure a battery module. A busbar may be applied to the battery module to electrically connect a plurality of battery cells. In a case where high-speed charging is necessary, an amount of current flowing through the busbar may increase, which may cause heat generation in the busbar. As such, a method of expanding an area of the busbar may be considered to mitigate the heat generation in the busbar, but a problem may arise in that a portion of the expanded busbar blocks a vent provided in a battery, thereby deteriorating a function of the vent. Therefore, it is desirable to have a method that can expand the area of the busbar while maintaining the function of the vent.

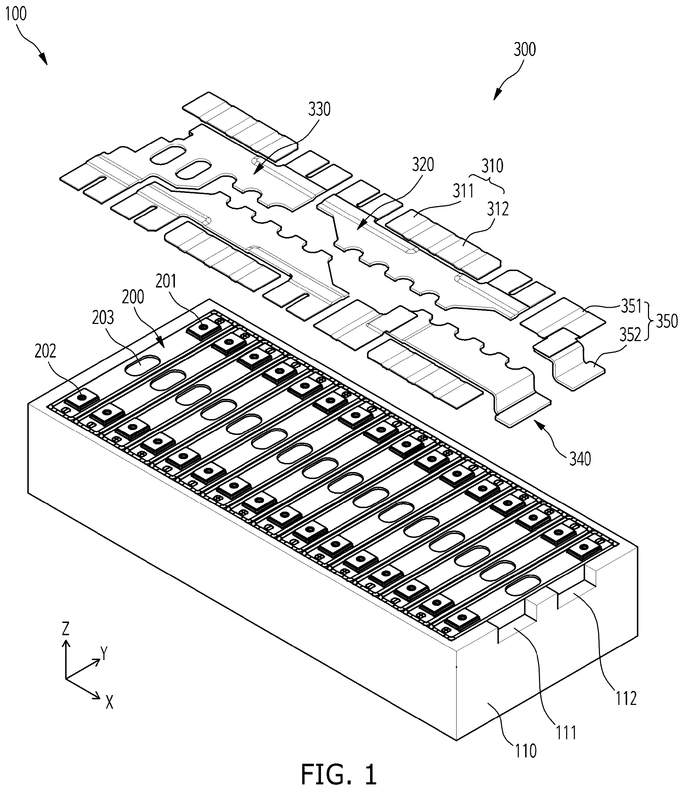

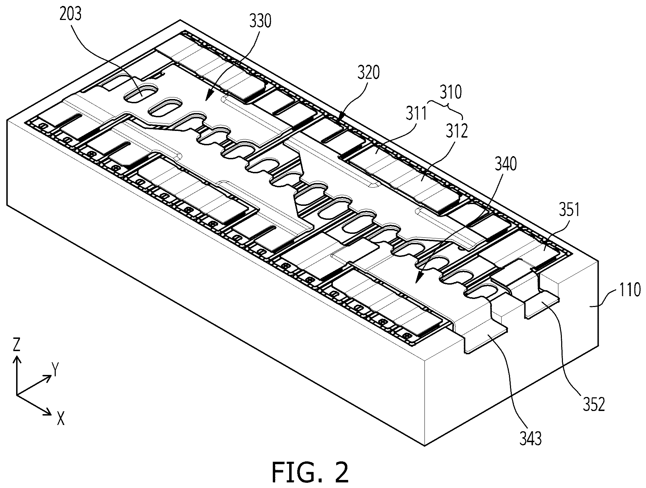

FIG. 1 is an exploded perspective view illustrating an example of a battery module according to some embodiments of the present disclosure, and FIG. 2 is a perspective view illustrating an example of the battery module.

Referring to FIG. 1 and FIG. 2, a battery module 100 according to some embodiments of the present disclosure may include a plurality of battery cells 200 each including a vent 203 and electrode terminals 201 and 202, a busbar 300 that electrically connects the plurality of electrode terminals and at least a part of which is disposed between the plurality of vents 203, and a housing 110 in which the plurality of battery cells 200 are accommodated.

The battery cell 200 may include a battery case, and an electrode assembly and an electrolyte accommodated in the battery case. The electrode assembly and the electrolyte electrochemically react to generate energy. On one surface of the battery cell 200, a first electrode terminal 201 and a second electrode terminal 202, which are electrically connected to the busbar 300, and a vent 203, which is an exhaust passage for gas generated inside, may be provided. The first electrode terminal 201 of the battery cell 200 may be a positive electrode terminal, and the second electrode terminal 202 may be a negative electrode terminal. Of course, the reverse may also be true. The vent 203 may be configured to open when a pressure greater than or equal to a predetermined critical pressure is generated inside the battery cell 200.

The electrode terminals of the battery cells 200 may be electrically connected in series or in parallel by the busbar 300. Of course, a structure in which the electrode terminals of the battery cells 200 are connected by the busbar 300 may also be a combination of series and parallel connections. The number and arrangement of the battery cells are not limited to the structure illustrated in FIG. 1, and may be changed as necessary.

The plurality of battery cells 200 may be arranged in a first direction X such that wide surfaces of the battery cells 200 face each other, and the arranged plurality of battery cells 200 may be accommodated in the housing 110.

The plurality of battery cells 200 may be disposed such that the same electrode terminals are adjacent in the first direction X. For example, positive electrode terminals of the plurality of battery cells 200 may be arranged in a line along the first direction X, and negative electrode terminals may also be arranged in a line along the first direction X.

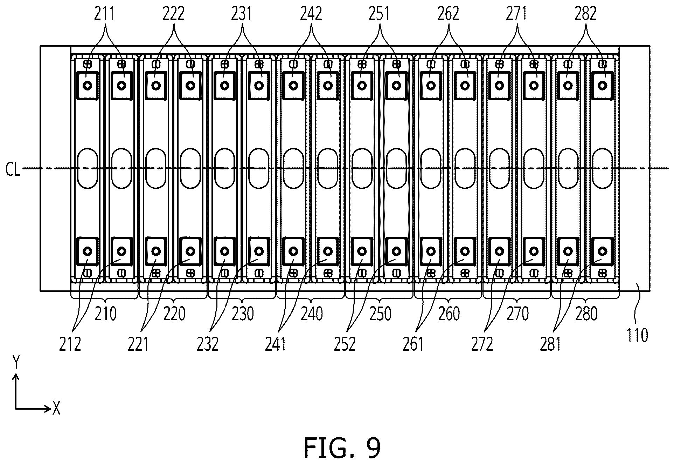

The plurality of battery cells 200 may be disposed such that different electrode terminals are adjacent to each other in the first direction X. That is, different electrode terminals may be alternately disposed along the first direction X. For example, positive electrode terminals and negative electrode terminals of the plurality of battery cells 200 may be alternately disposed along the first direction X. (See FIG. 9).

The battery case forms the overall appearance of the battery cell 200 and may be formed of a conductive metal such as aluminum, an aluminum alloy, or nickel-plated steel. The battery case may provide a space in which the electrode assembly is accommodated. Although the battery case is illustrated as a prismatic case and the battery cell 200 is illustrated as a prismatic battery cell, the scope of the present disclosure is not limited thereto. The battery cell 200 may be a battery cell of any shape, such as prismatic, cylindrical, or pouch-type.

The battery cell 200 may be a lithium battery cell, a sodium battery cell, or the like. However, the scope of the present disclosure is not limited thereto, and the battery cell 200 includes any battery that can repeatedly provide electricity through charging and discharging. In some embodiments, when the battery cell 200 is a lithium battery cell, the battery cell 200 may be used in an electric vehicle (EV) because of its excellent cycle life characteristics and high-rate characteristics. For example, the battery cell 200 may be used in a hybrid vehicle such as a plug-in hybrid electric vehicle (PHEV). In addition, the lithium battery cell may be used in fields requiring storage of a large amount of electric power. For example, the lithium battery cell may be used in electric bicycles, electric power tools, and the like.

The busbar 300 may electrically connect the first electrode terminal 201 and the second electrode terminal 202. The busbar 300 may connect the plurality of battery cells 200 in series and/or in parallel. To this end, a plurality of busbars 300 may be provided. In some embodiments, the busbar 300 may electrically connect the first electrode terminal 201 of the battery cell 200 to a first electrode terminal or a second electrode terminal of another battery cell. Alternatively, the busbar 300 may electrically connect the second electrode terminal 202 of the battery cell 200 to a first electrode terminal or a second electrode terminal of another battery cell. The busbar 300 may be connected to the first electrode terminal 201 and/or the second electrode terminal 202 by a method such as welding.

A plurality of busbars 300 may be provided and configured to electrically connect the electrode terminals of the plurality of battery cells 200.

In some embodiments, the busbar 300 may include a first busbar 310 that electrically connects electrode terminals of adjacent battery cells 200, a second busbar 320 that electrically connects electrode terminals of spaced-apart battery cells 200 and at least a part of which is disposed between the plurality of vents 203, a third busbar 330 that electrically connects an electrode terminal disposed on one side of one battery cell and an electrode terminal disposed on the other side of another battery cell, a fourth busbar 340 that is coupled to an electrode terminal disposed on one side of one battery cell 200 and is electrically connected to an external terminal, and a fifth busbar 350 that is coupled to an electrode terminal disposed on the other side of another battery cell and is electrically connected to an external terminal.

Here, if the electrode terminal disposed on one side of the battery cell 200 is the first electrode terminal 201, the electrode terminal disposed on the other side of the battery cell 200 may be the second electrode terminal 202. Of course, the reverse may also be true.

The fourth busbar 340 and the fifth busbar 350 may be busbars that connect the battery cells 200 and external terminals. For example, the fourth busbar 340 may be electrically connected to a positive external terminal, and the fifth busbar 350 may be electrically connected to a negative external terminal. Of course, the reverse may also be true.

In some embodiments, the fourth busbar 340 may include a (4-2)-th coupling part 343 that is electrically connected to an external terminal, and the fifth busbar 350 may include a (5-2)-th coupling part 352 that is electrically connected to an external terminal. The (4-2)-th coupling part 343 and the (5-2)-th coupling part 352 may be formed to be exposed to the outside of the housing 110 to be electrically connected to the external terminals. In some embodiments, a fourth busbar receiving groove 111 in which the (4-2)-th coupling part 343 is accommodated and a fifth busbar receiving groove 112 in which the (5-2)-th coupling part 352 is accommodated may be formed in the housing 110.

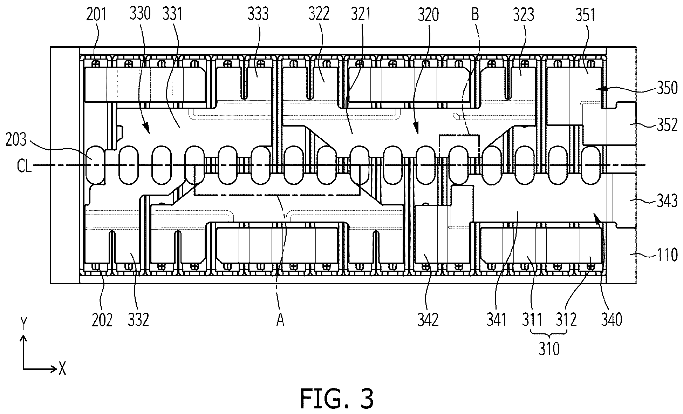

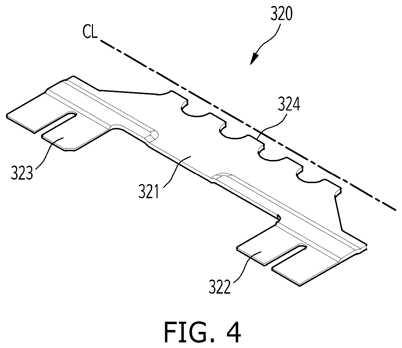

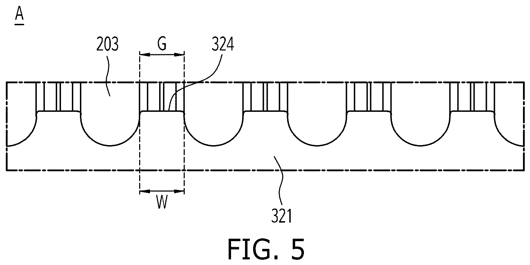

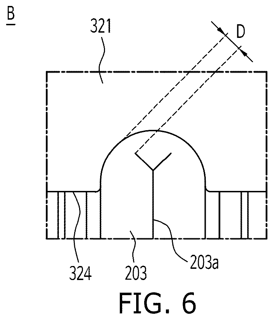

FIG. 3 is a plan view illustrating an example of a battery module according to some embodiments of the present disclosure. FIG. 4 is a perspective view illustrating an example of a second busbar among busbars of a battery module. FIG. 5 is an enlarged view illustrating an example of region A in FIG. 3, and FIG. 6 is an enlarged view illustrating an example of region B in FIG. 3.

Referring to FIG. 1 to FIG. 3, the first busbar 310 may be a configuration that electrically connects electrode terminals of adjacent battery cells 200.

In some embodiments, the first busbar 310 may be formed as a straight plate. The first busbar 310 may include a (1-1)-th coupling part 311 and a (1-2)-th coupling part 312, which are respectively coupled to electrode terminals of adjacent battery cells. For example, the (1-1)-th coupling part 311 and the (1-2)-th coupling part 312 may be arranged side by side along the first direction X.

In some embodiments, referring to FIG. 3, in the first busbar 310, the (1-1)-th coupling part 311 may be coupled to a second electrode terminal of one battery cell, and the (1-2)-th coupling part 312 may be coupled to a first electrode terminal of an adjacent other battery cell. Of course, conversely, in the first busbar 310, the (1-1)-th coupling part 311 may be coupled to a first electrode terminal of one battery cell, and the (1-2)-th coupling part 312 may be coupled to a second electrode terminal of an adjacent other battery cell. That is, the first busbar 310 may be coupled to electrically connect a first electrode terminal and a second electrode terminal disposed in the first direction X in adjacent battery cells.

Referring to FIG. 1 to FIG. 4, the second busbar 320 electrically connects electrode terminals of spaced-apart battery cells 200, and at least a part of the second busbar 320 may be disposed between the plurality of vents 203.

In some embodiments, the second busbar 320 may include a second base plate 321 disposed spaced apart from the battery cell 200, a (2-1)-th coupling part 322 that protrudes to one side from the second base plate 321 and is coupled to an electrode terminal of one battery cell, a (2-2)-th coupling part 323 that is spaced apart from the (2-1)-th coupling part 322 on the second base plate 321, protrudes to one side, and is coupled to an electrode terminal of another battery cell, and a second extended portion 324 that protrudes to the other side from the second base plate 321 and is disposed between the plurality of vents 203.

The second base plate 321 may be a configuration that connects the (2-1)-th coupling part 322 and the (2-2)-th coupling part 323 to each other. The second base plate 321 may be disposed spaced apart from the battery cell 200 in a third direction Z so as not to contact a surface of the battery cell 200. Since the surface of the battery cell 200 may function as a negative electrode, the second base plate 321 may be disposed spaced apart from the battery cell 200 to prevent a short circuit from occurring.

In some embodiments, referring to FIG. 3, in the second busbar 320, the (2-1)-th coupling part 322 may be coupled to a second electrode terminal of one battery cell, and the (2-2)-th coupling part 323 may be coupled to a first electrode terminal of another battery cell spaced apart by a predetermined interval. Of course, conversely, in the second busbar 320, the (2-1)-th coupling part 322 may be coupled to a first electrode terminal of one battery cell, and the (2-2)-th coupling part 323 may be coupled to a second electrode terminal of another battery cell spaced apart by a predetermined interval. That is, the second busbar 320 may be coupled to electrically connect a first electrode terminal and a second electrode terminal disposed in the first direction X in battery cells spaced apart by a predetermined interval.

In some embodiments, two or more battery cells may be disposed between a battery cell to which the (2-1)-th coupling part 322 of the second busbar 320 is coupled and a battery cell to which the (2-2)-th coupling part 323 is coupled.

The second extended portion 324 may protrude from the second base plate 321 in a direction opposite to the direction in which the (2-1)-th coupling part 322 and the (2-2)-th coupling part 323 protrude. That is, the second extended portion 324 may protrude toward the vent 203 of the battery cell 200.

The second extended portion 324 may be formed to a length to be spaced apart from a center line CL connecting centers of the vents 203 respectively formed on the plurality of battery cells 200.

For example, when the second extended portion 324 is formed with a length that is close to the center line CL or extends beyond the center line CL, the second extended portion 324 may be close to or in contact with a busbar disposed on the opposite side of the center line CL. In this case, a short circuit or dielectric breakdown may occur. Therefore, the second extended portion 324 may be formed with a length that does not extend beyond the center line CL and is disposed spaced apart from the center line CL by a certain interval in order to maintain a minimum insulation distance with a busbar facing each other in a second direction Y. Here, the distance spaced apart from the center line CL may vary depending on a magnitude of a voltage of the battery.

The second extended portion 324 may be disposed between the vents 203 respectively formed on adjacent battery cells 200, and may be formed to have a size equal to or smaller than a gap G between the vents 203. That is, a width W in a first direction X of the second extended portion 324 may be formed to be equal to or smaller than the gap G between the vents 203.

For example, if the width W of the second extended portion 324 is formed to be larger than the gap G between the vents 203, the second extended portion 324 may interfere with a flow path of gas discharged through the vents 203. Therefore, so that the second extended portion 324 does not interfere with the vents 203, the width W of the second extended portion 324 may be formed to be equal to or smaller than the gap G between the vents 203 and disposed between the vents 203.

In some embodiments, the second extended portion 324 may be disposed spaced apart from a score part 203a formed inside the vent 203 by a certain interval D. The vent 203 may be formed with the score part 203a that is broken when an internal pressure of the battery cell 200 is equal to or greater than a certain value. Therefore, the second extended portion 324 may be disposed spaced apart from the score part 203a by a predetermined interval D so as not to interfere with the second extended portion 324 when the vent 203 is broken. For example, the second extended portion 324 may be located between the vents 203 and disposed to have a gap of at least 2 mm or more from the score part 203a.

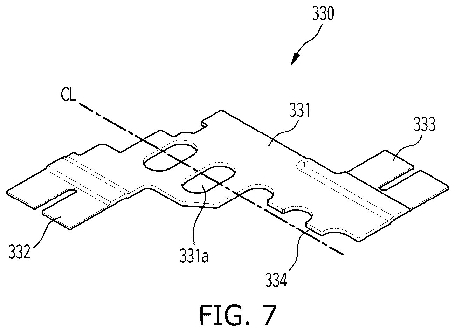

FIG. 7 is a perspective view illustrating an example of a third busbar among busbars of a battery module according to some embodiments of the present disclosure.

Referring to FIG. 1 to FIG. 3 and FIG. 7, the third busbar 330 may be a configuration that electrically connects an electrode terminal disposed on one side of one battery cell and an electrode terminal disposed on the other side of another battery cell.

In some embodiments, the third busbar 330 may include a third base plate 331 disposed spaced apart from the battery cell 200 and including a through-hole 331a communicating with the vent 203, a (3-1)-th coupling part 332 protruding to one side of the third base plate 331 and coupled to an electrode terminal disposed on one side of one battery cell, and a (3-2)-th coupling part 333 protruding to the other side of the third base plate 331 and coupled to an electrode terminal disposed on the other side of another battery cell.

The third base plate 331 may be a configuration that connects the (3-1)-th coupling part 332 and the (3-2)-th coupling part 333 to each other. The third base plate 331 may be disposed spaced apart from the battery cell 200 in a third direction Z so as not to contact a surface of the battery cell 200. Since the surface of the battery cell 200 may function as a negative electrode, the third base plate 331 may be disposed spaced apart from the battery cell 200 to prevent a short circuit from occurring.

Referring to FIG. 3, since the third base plate 331 is disposed on the vent 203 of the battery cell 200, a through-hole 331a may be formed in the third base plate 331 so as not to interfere with a flow path of gas discharged through the vent 203. The through-hole 331a may be formed at a position facing the vent 203 of the battery cell 200 in the third direction Z. The through-hole 331a may be formed in a shape corresponding to the vent 203, and may be formed to have a size equal to or larger than a circumference of the vent 203.

The (3-1)-th coupling part 332 and the (3-2)-th coupling part 333 may be formed to protrude from the third base plate 331 so as to face in opposite directions with respect to a center line CL passing through a center of the third base plate 331.

In some embodiments, referring to FIG. 3, in the third busbar 330, the (3-1)-th coupling part 332 may be coupled to a second electrode terminal of one battery cell, and the (3-2)-th coupling part 333 may be coupled to a first electrode terminal of another battery cell spaced apart by a predetermined interval. Of course, conversely, in the third busbar 330, the (3-1)-th coupling part 332 may be coupled to a first electrode terminal of one battery cell, and the (3-2)-th coupling part 333 may be coupled to a second electrode terminal of another battery cell spaced apart by a predetermined interval. That is, the third busbar 330 may be coupled to electrically connect a first electrode terminal and a second electrode terminal spaced apart from each other in a second direction Y in battery cells spaced apart by a predetermined interval.

The third busbar 330 may further include a third extended portion 334 that protrudes from the third base plate 331 and is disposed between the plurality of vents 203. The third extended portion 334 may protrude from the third base plate 331 toward the vent 203 of the battery cell 200.

The third extended portion 334 may be formed to a length to be spaced apart from a center line CL connecting centers of the vents 203 respectively formed on the plurality of battery cells 200.

For example, when the third extended portion 334 is formed with a length that is close to the center line CL or extends beyond the center line CL, the third extended portion 334 may be close to or in contact with a busbar disposed on the opposite side of the center line CL. In this case, a short circuit or dielectric breakdown may occur. Therefore, the third extended portion 334 may be formed with a length that does not extend beyond the center line CL and is disposed spaced apart from the center line CL by a certain interval in order to maintain a minimum insulation distance with a busbar facing each other in a second direction Y. Here, the distance spaced apart from the center line CL may vary depending on a magnitude of a voltage of the battery.

The third extended portion 334 may be disposed between the vents 203 respectively formed on adjacent battery cells 200, and may be formed to have a size equal to or smaller than a gap between the vents 203. That is, a width in a first direction X of the third extended portion 334 may be formed to be equal to or smaller than the gap between the vents 203.

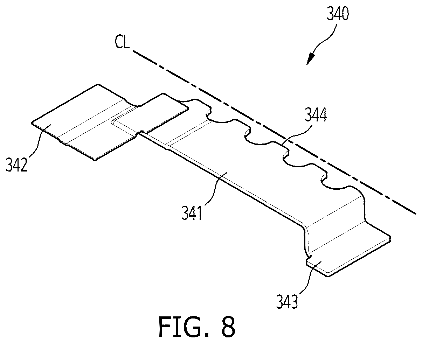

FIG. 8 is a perspective view illustrating an example of a fourth busbar among busbars of a battery module according to some embodiments of the present disclosure.

Referring to FIG. 1 to FIG. 3 and FIG. 8, the fourth busbar 340 may be a configuration that is coupled to an electrode terminal disposed on one side of one battery cell and is electrically connected to an external terminal.

In some embodiments, the fourth busbar 340 may include a fourth base plate 341 disposed spaced apart from the battery cell 200, a (4-1)-th coupling part 342 that protrudes to one side from the fourth base plate 341 and is coupled to an electrode terminal of one battery cell, a (4-2)-th coupling part 343 that is spaced apart from the (4-1)-th coupling part 342 on the fourth base plate 341, protrudes in a direction intersecting the one side, and is electrically connected to an external terminal, and a fourth extended portion 344 that protrudes to the other side from the fourth base plate 341 and is disposed between the plurality of vents 203.

In some embodiments, the fourth base plate 341 may be formed long in a first direction X, the (4-1)-th coupling part 342 may protrude in a second direction Y from one end of the fourth base plate 341, and the (4-2)-th coupling part 343 may protrude in the first direction X from the other end of the fourth base plate 341.

The fourth base plate 341 may be a configuration that connects the (4-1)-th coupling part 342 and the (4-2)-th coupling part 343 to each other. The fourth base plate 341 may be disposed spaced apart from the battery cell 200 in a third direction Z so as not to contact a surface of the battery cell 200. Since the surface of the battery cell 200 may function as a negative electrode, the fourth base plate 341 may be disposed spaced apart from the battery cell 200 to prevent a short circuit from occurring.

In some embodiments, in the fourth busbar 340, the (4-1)-th coupling part 342 may be coupled to a first electrode terminal of one battery cell, and the (4-2)-th coupling part 343 may be disposed in the fourth busbar receiving groove 111 of the housing 110. That is, the (4-2)-th coupling part 343 may be a configuration that is electrically connected to an external terminal to transmit power. For example, the fourth busbar 340 may be a High Voltage Busbar.

The fourth extended portion 344 may protrude from the fourth base plate 341 toward the vent 203 of the battery cell 200. The fourth extended portion 344 may be formed to a length to be spaced apart from a center line CL connecting centers of the vents 203 respectively formed on the plurality of battery cells 200.

For example, when the fourth extended portion 344 is formed with a length that is close to the center line CL or extends beyond the center line CL, the fourth extended portion 344 may be close to or in contact with a busbar disposed on the opposite side of the center line CL. In this case, a short circuit or dielectric breakdown may occur. Therefore, the fourth extended portion 344 may be formed with a length that does not extend beyond the center line CL and is disposed spaced apart from the center line CL by a certain interval in order to maintain a minimum insulation distance with a busbar facing each other in a second direction Y. Here, the distance spaced apart from the center line CL may vary depending on a magnitude of a voltage of the battery.

The fourth extended portion 344 may be disposed between the vents 203 respectively formed on adjacent battery cells 200, and may be formed to have a size equal to or smaller than a gap between the vents 203. That is, a width in a first direction X of the fourth extended portion 344 may be formed to be equal to or smaller than the gap between the vents 203.

Referring to FIG. 1 to FIG. 3, the fifth busbar 350 may be a configuration that is coupled to an electrode terminal disposed on the other side of one battery cell and is electrically connected to an external terminal.

In some embodiments, the fifth busbar 350 may include a (5-1)-th coupling part 351 that is coupled to an electrode terminal of a battery cell, and a (5-2)-th coupling part 352 that is electrically connected to an external terminal. The (5-1)-th coupling part 351 may be coupled to an electrode terminal of a battery cell, and the (5-2)-th coupling part 352 may protrude in a second direction Y from the (5-1)-th coupling part 351 and be disposed in the fifth busbar receiving groove 112 of the housing 110. That is, the (5-2)-th coupling part 352 may be a configuration that is electrically connected to an external terminal to transmit power. For example, the fifth busbar 350 may be a High Voltage Busbar.

In some embodiments, the fourth busbar 340 and the fifth busbar 350 may be connected to external terminals having different polarities. For example, when the (4-2)-th coupling part 343 is connected to a negative external terminal, the (5-2)-th coupling part 352 may be connected to a positive external terminal. Conversely, when the (4-2)-th coupling part 343 is connected to a positive external terminal, the (5-2)-th coupling part 352 may be connected to a negative external terminal.

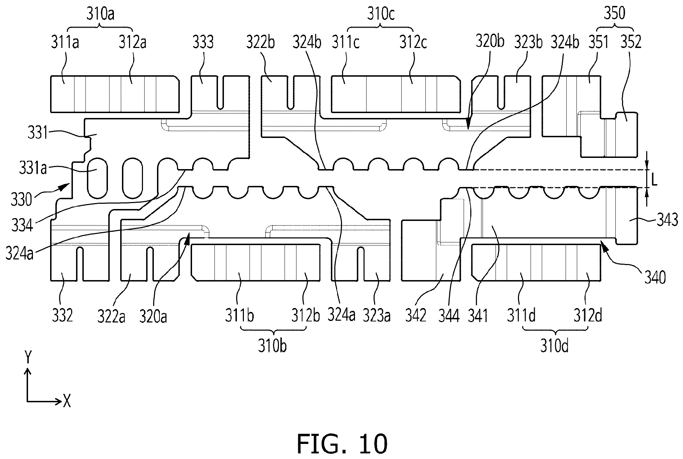

FIG. 9 is a plan view illustrating a plurality of battery cells in a battery module according to some embodiments of the present disclosure, and FIG. 10 is a plan view illustrating an example of busbars of the battery module.

Referring to FIG. 9 and FIG. 10, the plurality of battery cells may include first to eighth battery cells disposed along a first direction X. In embodiments, in the battery cells disposed along the first direction X, a first electrode terminal and a second electrode terminal may be alternately disposed. Here, if the first electrode terminal is a positive electrode terminal, the second electrode terminal may be a negative electrode terminal. Of course, the reverse may also be true.

A first battery cell 210 may be in a form in which two battery cells are connected in parallel. For example, first electrode terminals respectively formed on the two battery cells in the first battery cell 210 may be coupled together to a (1-11)-th coupling part 311a of a (1-1)-th busbar 310a to be connected in parallel. Since this parallel connection structure is the same for other battery cells, a detailed description thereof is omitted.

The first battery cell 210 is not limited to being composed of two battery cells, and the first battery cell 210 may be composed of a single battery cell, or may be in a form in which three or more battery cells are connected in parallel.

In some embodiments, the first busbar may include a (1-1)-th busbar 310a connecting a (1-1)-th electrode terminal 211 of the first battery cell 210 and a (2-2)-th electrode terminal 222 of a second battery cell 220, a (1-2)-th busbar 310b connecting a (3-2)-th electrode terminal 232 of a third battery cell 230 and a (4-1)-th electrode terminal 241 of a fourth battery cell 240, a (1-3)-th busbar 310c connecting a (5-1)-th electrode terminal 251 of a fifth battery cell 250 and a (6-2)-th electrode terminal 262 of a sixth battery cell 260, and a (1-4)-th busbar 310d connecting a (7-2)-th electrode terminal 272 of a seventh battery cell 270 and an (8-1)-th electrode terminal 281 of an eighth battery cell 280.

A (1-11)-th coupling part 311a of the busbar 310a may be coupled to the (1-1)-th electrode terminal 211 of the first battery cell 210, and a (1-12)-th coupling part 312a may be coupled to the (2-2)-th electrode terminal 222 of the second battery cell 220.

A (1-21)-th coupling part 311b of the busbar 310b may be coupled to the (3-2)-th electrode terminal 232 of the third battery cell 230, and a (1-22)-th coupling part 312b may be coupled to the (4-1)-th electrode terminal 241 of the fourth battery cell 240.

A (1-31)-th coupling part 311c of the busbar 310c may be coupled to the (5-1)-th electrode terminal 251 of the fifth battery cell 250, and a (1-32)-th coupling part 312c may be coupled to the (6-2)-th electrode terminal 262 of the sixth battery cell 260.

A (1-41)-th coupling part 311d of the busbar 310d may be coupled to the (7-2)-th electrode terminal 272 of the seventh battery cell 270, and a (1-42)-th coupling part 312d may be coupled to the (8-1)-th electrode terminal 281 of the eighth battery cell 280.

In some embodiments, the second busbar may include a (2-1)-th busbar 320a connecting a (2-1)-th electrode terminal 221 of the second battery cell 220 and a (5-2)-th electrode terminal 252 of the fifth battery cell 250, and a (2-2)-th busbar 320b connecting a (4-2)-th electrode terminal 242 of the fourth battery cell 240 and a (7-1)-th electrode terminal 271 of the seventh battery cell 270.

In the (2-1)-th busbar 320a, a (2-11)-th coupling part 322a may be coupled to the (2-1)-th electrode terminal 221 of the second battery cell 220, and a (2-12)-th coupling part 323a may be coupled to the (5-2)-th electrode terminal 252 of the fifth battery cell 250.

In the (2-2)-th busbar 320b, a (2-21)-th coupling part 322b may be coupled to the (4-2)-th electrode terminal 242 of the fourth battery cell 240, and a (2-22)-th coupling part 323b may be coupled to the (7-1)-th electrode terminal 271 of the seventh battery cell 270.

In some embodiments, the third busbar 330 may connect a (1-2)-th electrode terminal 212 of the first battery cell 210 and a (3-1)-th electrode terminal 231 of the third battery cell 230. That is, in the third busbar 330, the (3-1)-th coupling part 332 may be coupled to the (1-2)-th electrode terminal 212 of the first battery cell 210, and the (3-2)-th coupling part 333 may be coupled to the (3-1)-th electrode terminal 231 of the third battery cell 230.

In some embodiments, in the fourth busbar 340, the (4-1)-th coupling part 342 may be coupled to a (6-1)-th electrode terminal 261 of the sixth battery cell 260, and in the fifth busbar 350, the (5-1)-th coupling part 351 may be coupled to an (8-2)-th electrode terminal 282 of the eighth battery cell 280.

Through this busbar coupling structure, the first to the eighth battery cells may be directly connected in series.

Referring to FIG. 10, a (2-1)-th extended portion 324a of the (2-1)-th busbar 320a may be disposed to face a third extended portion 334 of the third busbar 330, the (2-1)-th extended portion 324a of the (2-1)-th busbar 320a may be disposed to face a (2-2)-th extended portion 324b of the (2-2)-th busbar 320b, and the (2-2)-th extended portion 324b of the (2-2)-th busbar 320b may be disposed to face a fourth extended portion 344 of the fourth busbar 340. The extended portions disposed to face each other may be disposed spaced apart by an insulation distance L. The insulation distance L may mean an air insulation distance between two extended portions disposed to face each other. The insulation distance L may vary depending on a magnitude of a voltage of the battery.

As such, by forming the extended portion on the busbar, a temperature of heat generated from the busbar may be reduced. In some embodiments, when a structure without an extended portion on the busbar was compared with a structure with an extended portion, it was confirmed by finite element analysis that a maximum temperature generated from the busbar differed by about 8°C or more.

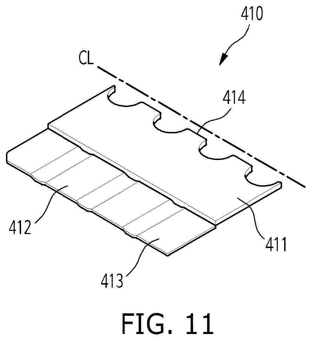

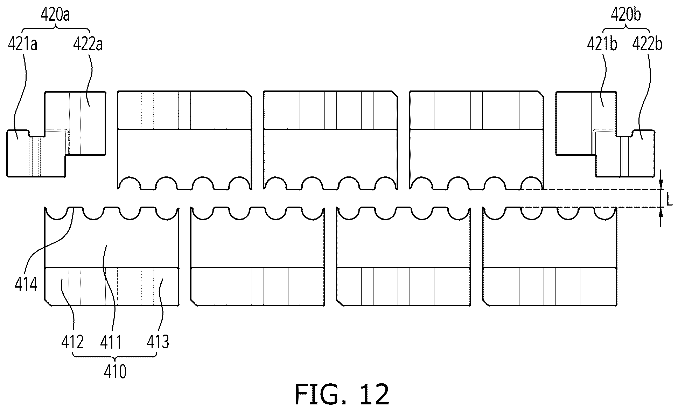

FIG. 11 is a perspective view of another example of a busbar in a battery module according to some embodiments of the present disclosure, and FIG. 12 is a plan view of another example of a busbar in a battery module according to some embodiments of the present disclosure.

Referring to FIG. 9, FIG. 11, and FIG. 12, a busbar according to embodiments may include a first busbar 410 that electrically connects electrode terminals of adjacent battery cells, and second busbars 420a and 420b that electrically connect an electrode terminal of a battery cell and an external terminal. That is, the first busbar 410 may be a configuration that connects between battery cells, and the second busbars 420a and 420b may be a configuration that connects a battery cell and an external electrode.

In some embodiments, the first busbar 410 may include a first base plate 411 disposed spaced apart from the battery cell, coupling parts 412 and 413 extending to one side of the first base plate 411 and coupled to electrode terminals of a plurality of battery cells to be electrically connected, and an extended portion 414 extending from the other side of the first base plate 411 toward the vent side and disposed between the plurality of vents.

The first base plate 411 may be a configuration that connects a (1-1)-th coupling part 412 and a (1-2)-th coupling part 413 to each other. The first base plate 411 may be disposed spaced apart from the battery cell in a third direction so as not to contact a surface of the battery cell. Since the surface of the battery cell may function as a negative electrode, the first base plate 411 may be disposed spaced apart from the battery cell to prevent a short circuit from occurring.

The coupling part may include a (1-1)-th coupling part 412 and a (1-2)-th coupling part 413, which are respectively coupled to electrode terminals of adjacent battery cells. For example, the (1-1)-th coupling part 412 and the (1-2)-th coupling part 413 may be arranged side by side along the first direction X.

The extended portion 414 may protrude from the first base plate 411 in a direction opposite to a direction in which the (1-1)-th coupling part 412 and the (1-2)-th coupling part 413 protrude. The extended portion 414 may protrude toward a vent of the battery cell.

In some embodiments, referring to FIG. 9 and FIG. 12, a (1-1)-th coupling part 412 of the first busbar 410 may be coupled to a (1-2)-th electrode terminal 212 of the first battery cell 210, and a (1-2)-th coupling part 413 may be coupled to a (2-1)-th electrode terminal 221 of the second battery cell 220. Therefore, a plurality of first busbars 410 may be provided to connect between electrode terminals disposed in the first direction X in adjacent battery cells.

The extended portions 414 of the first busbars 410 disposed to face each other may be disposed spaced apart by an insulation distance L. The insulation distance L may mean an air insulation distance between two extended portions disposed to face each other. The insulation distance L may vary depending on a magnitude of a voltage of the battery.

The busbar may be a busbar that connects a battery cell and an external terminal. For example, a (2-1)-th busbar 420a may be electrically connected to a positive external terminal, and a (2-2)-th busbar 420b may be electrically connected to a negative external terminal. Of course, the reverse may also be true.

In some embodiments, the (2-1)-th busbar 420a may include a (2-11)-th coupling part 421a that is coupled to an electrode terminal of a battery cell, and a (2-12)-th coupling part 422a that is electrically connected to an external terminal. For example, the (2-11)-th coupling part 421a may be coupled to a (1-1)-th electrode terminal 211 of the first battery cell 210, and the (2-12)-th coupling part 422a may protrude to the outside in the first direction X from the (2-11)-th coupling part 421a to be electrically connected to an external terminal.

The (2-2)-th busbar 420b may include a (2-21)-th coupling part 421b that is coupled to an electrode terminal of a battery cell, and a (2-22)-th coupling part 422b that is electrically connected to an external terminal. For example, the (2-21)-th coupling part 421b may be coupled to an (8-2)-th electrode terminal 282 of the eighth battery cell 280, and the (2-22)-th coupling part 422b may protrude to the outside in the first direction X from the (2-21)-th coupling part 421b to be electrically connected to an external terminal.

Although the present disclosure has been described with reference to embodiments and drawings illustrating aspects thereof, the present disclosure is not limited thereto. Various modifications and variations can be made by a person skilled in the art to which the present disclosure belongs within the scope of the appended claims.

## Claims

1. A battery module (100) comprising:
a plurality of battery cells (200) each comprising a vent (203) and an electrode terminal; and
a busbar (300) electrically connecting an electrode terminal to another electrode terminal of the plurality of battery cells,
wherein at least a part of the busbar (300) is disposed between a vent (203) and another vent of the plurality of battery cells.

2. The battery module (100) as claimed in claim 1, wherein the busbar (300) comprises:
a first busbar (310) electrically connecting electrode terminals of adjacent battery cells (200);
a second busbar (320) electrically connecting electrode terminals of spaced-apart battery cells (200),
wherein at least a part of the second busbar (320) is disposed between a vent (203) and another vent of the plurality of battery cells; and
a third busbar (330) electrically connecting an electrode terminal disposed on one side of one of the battery cells (200) and an electrode terminal disposed on another side of another one of the battery cells (200).

3. The battery module (100) as claimed in claim 2, wherein the second busbar (320) comprises:
a second base plate (321) disposed spaced apart from the battery cells (200);
a (2-1)-th coupling part (322) protruding to one side from the second base plate (321) and coupled to an electrode terminal of one of the battery cells (200);
a (2-2)-th coupling part (323) protruding to the one side from the second base plate (321), spaced apart from the (2-1)-th coupling part (322), and coupled to an electrode terminal of another one of the battery cells (200); and
a second extended portion (324) protruding to another side from the second base plate (321) and disposed between a vent (203) and another vent of the plurality of battery cells.

4. The battery module (100) as claimed in claim 3, wherein the second extended portion (324) is formed to a length to be spaced apart from a center line (CL) connecting centers of the vents (203) respectively formed in the plurality of battery cells (200).

5. The battery module (100) as claimed in any one of claims 2 to 4, wherein the third busbar (330) comprises:
a third base plate (331) disposed spaced apart from the battery cells (200) and comprising a through-hole (331a) that communicates with the vent (203);
a (3-1)-th coupling part (332) protruding to one side of the third base plate (331) and coupled to an electrode terminal disposed on one side of one of the battery cells (200); and
a (3-2)-th coupling part (333) protruding to another side of the third base plate (331) and coupled to an electrode terminal disposed on another side of another one of the battery cells (200).

6. The battery module (100) as claimed in claim 5, wherein the through-hole (331a) is formed in a shape corresponding to the vent (203), and is formed with a size equal to or larger than a circumference of the vent (203).

7. The battery module (100) as claimed in claim 5 or 6, wherein the third busbar (330) further comprises a third extended portion (334) protruding from the third base plate (331) and disposed between a vent (203) and another vent of the plurality of battery cells.

8. The battery module (100) as claimed in claim 7, wherein the third extended portion (334) is formed to a length to be spaced apart from a center line (CL) connecting centers of the vents (203) respectively formed in the plurality of battery cells (200).

9. The battery module (100) as claimed in any one of claims 2 to 8, wherein the busbar (300) further comprises:
a fourth busbar (340) coupled to an electrode terminal disposed on one side of one of the battery cells (200) and electrically connected to an external terminal; and
a fifth busbar (350) coupled to an electrode terminal disposed on another side of another one of the battery cells (200) and electrically connected to an external terminal.

10. The battery module (100) as claimed in claim 9, wherein the fourth busbar (340) comprises:
a fourth base plate (341) disposed spaced apart from the battery cells (200);
a (4-1)-th coupling part (342) protruding to one side from the fourth base plate (341) and coupled to an electrode terminal of one of the battery cells (200);
a (4-2)-th coupling part (343) protruding from the fourth base plate (341) in a direction intersecting the one side, spaced apart from the (4-1)-th coupling part (342), and electrically connected to the external terminal; and
a fourth extended portion (344) protruding to another side from the fourth base plate (341) and disposed between a vent (203) and another vent of the plurality of battery cells.

11. The battery module (100) as claimed in claim 10, wherein the fourth extended portion (344) is formed to a length to be spaced apart from a center line (CL) connecting centers of the vents (203) respectively formed in the plurality of battery cells (200).

12. The battery module (100) as claimed in any one of claims 2 to 11, wherein the plurality of battery cells (200) comprise first to eighth battery cells (210-280) disposed along a first direction (X), and
the first busbar (310) comprises:
a (1-1)-th busbar (310a) connecting a (1-1)-th electrode terminal (211) of the first battery cell (210) and a (2-2)-th electrode terminal (222) of the second battery cell (220);
a (1-2)-th busbar (310b) connecting a (3-2)-th electrode terminal (232) of the third battery cell (230) and a (4-1)-th electrode terminal (241) of the fourth battery cell (240);
a (1-3)-th busbar (310c) connecting a (5-1)-th electrode terminal (251) of the fifth battery cell (250) and a (6-2)-th electrode terminal (262) of the sixth battery cell (260); and
a (1-4)-th busbar (310d) connecting a (7-2)-th electrode terminal (272) of the seventh battery cell (270) and an (8-1)-th electrode terminal (281) of the eighth battery cell (280).

13. The battery module (100) as claimed in any one of claims 2 to 12, wherein the plurality of battery cells (200) comprise first to eighth battery cells (210-280) disposed along a first direction (X), and
the second busbar (320) comprises:
a (2-1)-th busbar (320a) connecting a (2-1)-th electrode terminal (221) of the second battery cell (220) and a (5-2)-th electrode terminal (252) of the fifth battery cell (250); and
a (2-2)-th busbar (320b) connecting a (4-2)-th electrode terminal (242) of the fourth battery cell (240) and a (7-1)-th electrode terminal (271) of the seventh battery cell (270).

14. The battery module (100) as claimed in any one of claims 2 to 13, wherein the plurality of battery cells (200) comprise first to eighth battery cells (210-280) disposed along a first direction (X), and
the third busbar (330) connects a (1-2)-th electrode terminal (212) of the first battery cell (210) and a (3-1)-th electrode terminal (231) of the third battery cell (230).

15. The battery module (100) as claimed in any one of claims 9 to 14, wherein the plurality of battery cells (200) comprise first to eighth battery cells (210-280) disposed along a first direction (X),
the fourth busbar (340) is coupled to a (6-1)-th electrode terminal (261) of the sixth battery cell (260), and
the fifth busbar (350) is coupled to an (8-2)-th electrode terminal (282) of the eighth battery cell (280).
